# EUROPEAN PATENT SPECIFICATION

(11) **EP 1 860 042 B1**
(45) Date of publication and mention of the grant of the patent: **18.04.2012**
(21) Application number: 06425287.7
(22) Date of filing: 02.05.2006
(51) Int. Cl.: B65G 47/08, B65G 47/88

(54) **Feed station for articles in automatic palletizing systems**
Zuführstation für Artikel in automatischen Palettiervorrichtungen
Station d'alimentation en articles pour systèmes de palettisation automatiques

(43) Date of publication of application: 28.11.2007
(73) Proprietor: Elettric 80 S.p.A., 42030 Viano, Reggio Emilia (IT)
(72) Inventor: Cavirani, Vittorio, 43024 Neviano Degli Arduini (PR) (IT)
(74) Representative: Brogi, Graziano

(56) References cited:
- WO-A-2006/024460
- US-A- 4 273 234
- US-A- 5 070 992
- US-A- 5 788 460

## Description

The present invention refers to a feed station for articles in automatic palletizing systems.

With specific reference to lightweight articles such as rolls of paper, handkerchiefs, diapers or the like, the use is known of sorting and palletizing systems able to organise and align several packs of such articles on pallets for subsequent transport towards sales outlets, storage warehouses, etc.

The known systems are generally associated with at least one feed line for single packs featuring one or more articles and, eventually, at least one feed line for packages consisting of a preset number of packs, previously placed side by side according to a specific configuration and wrapped in a heat-shrink plastic wrapping.

In the case of feeding packages of packs, these are generally conveyed directly towards a pickup station able to transfer each pack to one or more subsequent grouping and positioning stations on a pallet.

In the case of feeding single packs, the system comprises means of preset angular rotation and translation able to arrange a preset number of packs side by side and then convey these to the pickup station.

In particular, the packs are aligned in series of preset number, depending on the quantity that can be picked up from the pickup station and needed for the subsequent grouping and positioning phases on a pallet.

These known systems present a number of drawbacks, including the need to create two distinct feed lines for the single packs and packages of packs, with considerable overall dimensions.

Furthermore, the presence of dedicated equipment such as the means of rotation and translation of the single packs considerably boosts general system costs.

From patent document US 5,070,992, it is known a conveyor system which is capable of forming precisely positioned arrays of containers for packing and other processing operations, wherein alignment pins are vertically movable between a retracted position which allows the containers being conveyed by a conveyor belt to pass over the pins, and a deployed position in which the pins engage adjacent containers moving on the conveyor belt to stop further advancement of the containers.

However even this known conveyor system appears to require further improvements, in particular in order to exhibit an improved flexibility and adaptability to a wide range of different type of objects and articles, as shape and dimensions, to be palletised.

The patent document US 4,273,234 discloses a feed station according to the preamble of claim 1, for feeding articles to an elevator conveyor.

The main aim of the present invention is to excogitate a feed station for articles in automatic palletizing systems that ensures greater flexibility, including for articles of different types and dimensions, and which at the same time makes it possible to reduce overall dimensions and curb general costs.

As part of such technical aim, another purpose of the present invention is to achieve the previous aims with a simple structure, of relatively practical implementation, safe use and effective operation, as well as of a relatively low cost.

The purposes expounded above are all achieved by the feed station of claim 1.

Further characteristics and advantages of this invention will appear even more evident from the detailed description of a preferred, but not exclusive, form of embodiment of a feed station for articles in automatic palletizing systems, illustrated by way of non limiting example in the accompanying drawings, wherein:

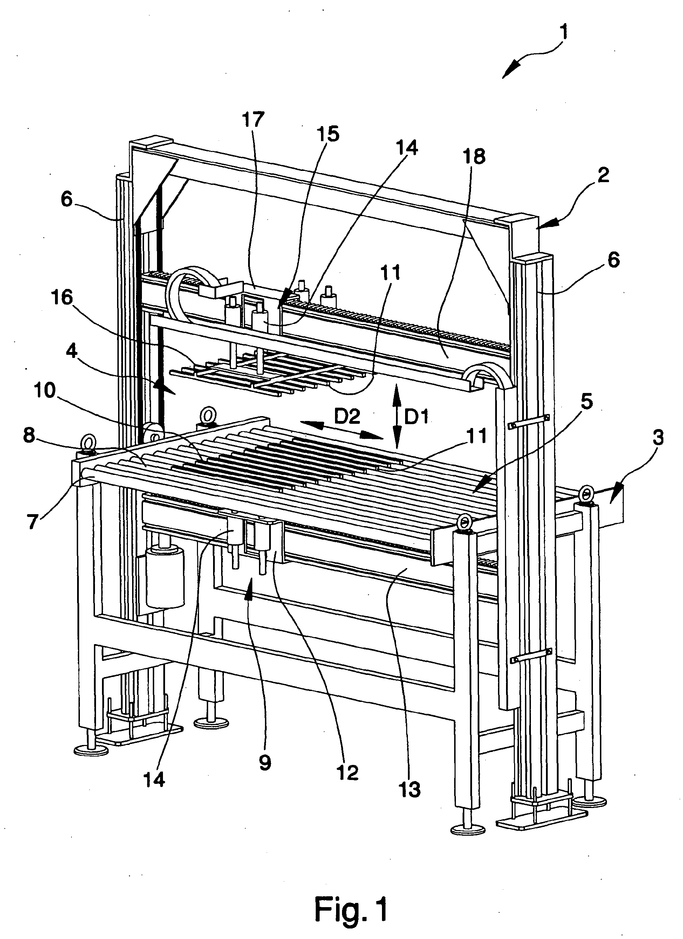

the figure 1 is a perspective view of the feed station according to the invention;
the figures 2, 3 and 4 show three subsequent articles feeding phases at a point corresponding to the feed station, according to the invention.

With special reference to such figures, a feed station for articles in automatic palletizing systems has been generally designated by reference numeral 1.

In this current description, specific reference is made to lightweight articles such as handkerchiefs, toilet paper, diapers or the like, formed into packs A of one or more units. The application of the invention to different types of articles cannot however be ruled out.

Several packs A can be placed side by side and wrapped in shrink-wrap plastic material, before palletizing, upstream of the feed station 1.

The feed station 1 comprises a frame 2 supporting the feeding means 3 for the packs A, positioned upstream of a pickup station of a traditional type palletizing system.

The palletizing system is of the type commonly used and can feature, for example, a phase for the pickup of a series of aligned packs A and their conveyance towards a subsequent station to form a layer of several series arranged side by side. Several layers are subsequently positioned one on top of the other on a pallet for subsequent packaging and conveying.

The feeding means 3 are associated, in terms of operation, with the temporary retention means 4 of at least one of the packs A; in particular the feeding means 3 and the temporary retention means 4 cooperate together for the simultaneous feeding of a preset number of packs A, so as to form, downstream, a series of aligned packs A able to be picked up from the pickup station for the subsequent palletizing phases.

In particular, the feeding means 3 comprise a motorised roller conveyor 5, arranged substantially horizontal and associated with the frame 2 at a point corresponding to two uprights 6 positioned on opposite sides, with respect to the feed direction V of the packs A.

The motorised roller conveyor 5 is associated downstream of a feed line B of packs A (single packs A or several packs A associated together) and upstream of a conveyor line C of packs A towards the pickup station. In particular, the feed line B and the conveyor line C can, for example, be of the motorised conveyor belt type or the like.

Usefully, the motorised roller conveyor 5 comprises a plurality of rollers 7 arranged parallel and distanced to one another to define respective slots 8.

The temporary retention means 4 comprise a lifting part 9 of one or more articles by means of the motorised roller conveyor 5, which is movable along a first direction D1 substantially vertical (and orthogonal with respect to the surface defined by the motorised roller conveyor 5).

Usefully, the lifting part 9 comprises a first comb 10 featuring a plurality of rods 11 arranged substantially parallel and coplanar to one another.

In particular, the lifting part 9 is movable along the first direction D 1 from a retracted position, in which the first comb 10 is arranged underneath the motorised roller conveyor 5, to a raised position, in which the first comb 10 is at least in part arranged above the feed surface of packs A defined by the motorised roller conveyor 5, or vice versa. During the switch from the retracted position to the raised position the rods 11 of the first comb 10 move through the slots 8 defined between one roller 7 and the roller that immediately follows.

The lifting part 9 is movable along a second direction D2 substantially horizontal and transversal with respect to the feed direction V of packs A.

In particular, the first comb 10 is supported by a first carriage 12 sliding on a first crosspiece 13 which is arranged below the motorised roller conveyor 5 and which is fastened at the ends to the uprights 6.

Usefully, the first carriage 12 slides on the first crosspiece 13 by means of motorised means and for the entire width of the motorised roller conveyor 5. This permits the positioning of the first comb 10 by the packs A to be lifted and the side movement (orthogonal to the feed direction) of the packs A once these have been lifted.

The height-variation actuators 14 of the first comb 10 (along the first direction D1), of the pneumatic linear actuator type, are placed between the first carriage 12 and the first comb 10.

The temporary retention means 4 comprise furthermore a tightening element 15 of one or more packs A on the first comb 10 in raised position, able to prevent accidental movements or falls of the packs A.

The tightening element 15 comprises a second comb 16, consisting of a plurality of rods 11 which are substantially parallel and coplanar to one another, and movable along the first direction D1 closer to and away (from a retracted position to a lowered position and vice versa) from the first comb 10, for tightening on one or more raised packs A.

In particular, the second comb 16 is supported by a second carriage 17 sliding on a second crosspiece 18, parallel with the first crosspiece 13, arranged above the motorised roller conveyor 5 and with its ends associated with the uprights 6.

Advantageously, the second carriage 17 is supported sliding along the second crosspiece 18 by means of motorised means and for the entire width of the motorised roller conveyor 5, in a synchronous way and aligned (on a vertical axis) with respect to the first comb 10.

In actual fact, the first and the second comb 10 and 16 move simultaneously and aligned together along the second direction D2, and simultaneously and along the first direction D 1 for the lifting and tightening of one or more packs A or for their release. Furthermore, the respective rods 11 define parallel surfaces so as to ensure a uniform grip on each of the retained packs A.

The height-variation actuators 14, of the pneumatic linear actuator type are placed between the second carriage 17 and the second comb 16 to allow their movement along the above first direction D1.

The feeding means 3 and temporary retention means 4 are, in terms of operation, associated with a management and control unit, of the microprocessor system type, of the PLC type or the like able to coordinate its movements (together with those of the feed line B and conveyor line C) for feeding the number of packs A required by the palletizing system towards the pickup station.

Advantageously, the movement of the first and second comb 10 and 16 along the first and the second direction D1 and D2 is piloted by the management and control unit according to the type of articles and to the number and dimensions of the packs A to be conveyed. This allows lifting by means of the first comb 10 and correct gripping by means of the second comb 16 including in the case of packs A of different dimensions or packages of such packs A.

The operation of the invention is as follows.

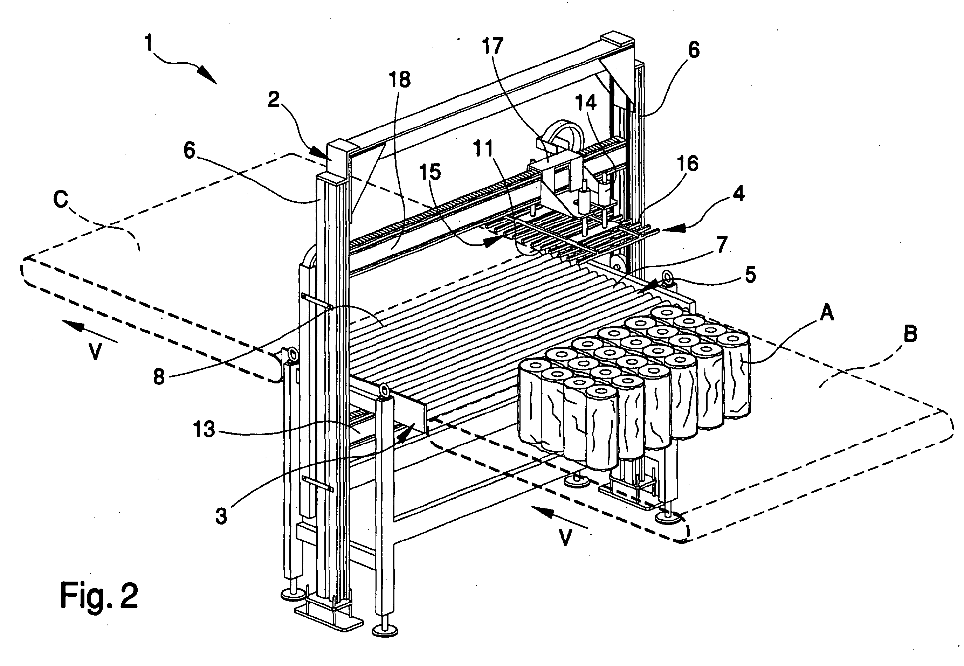

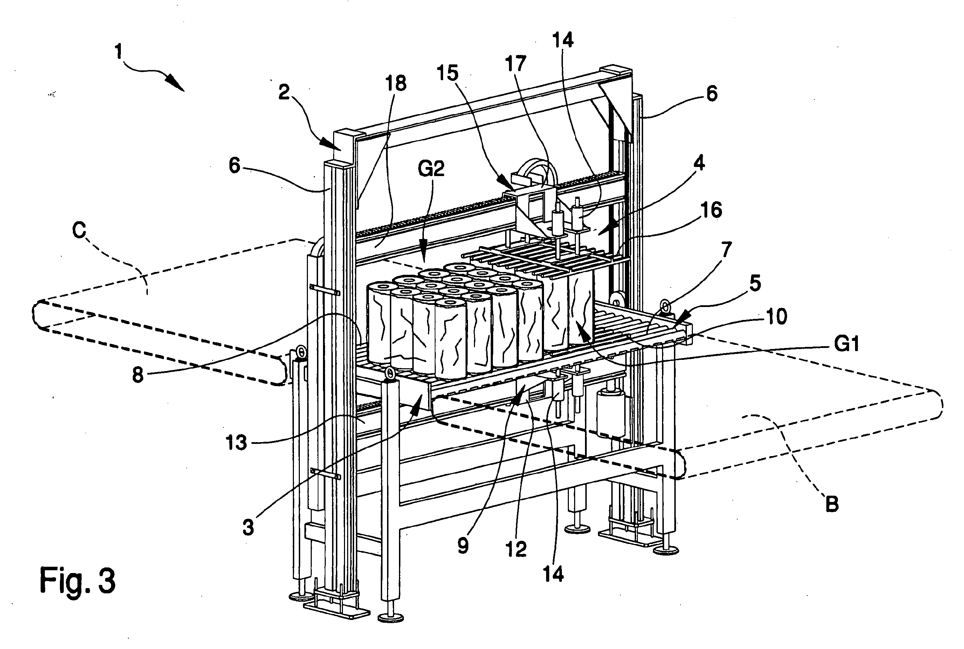

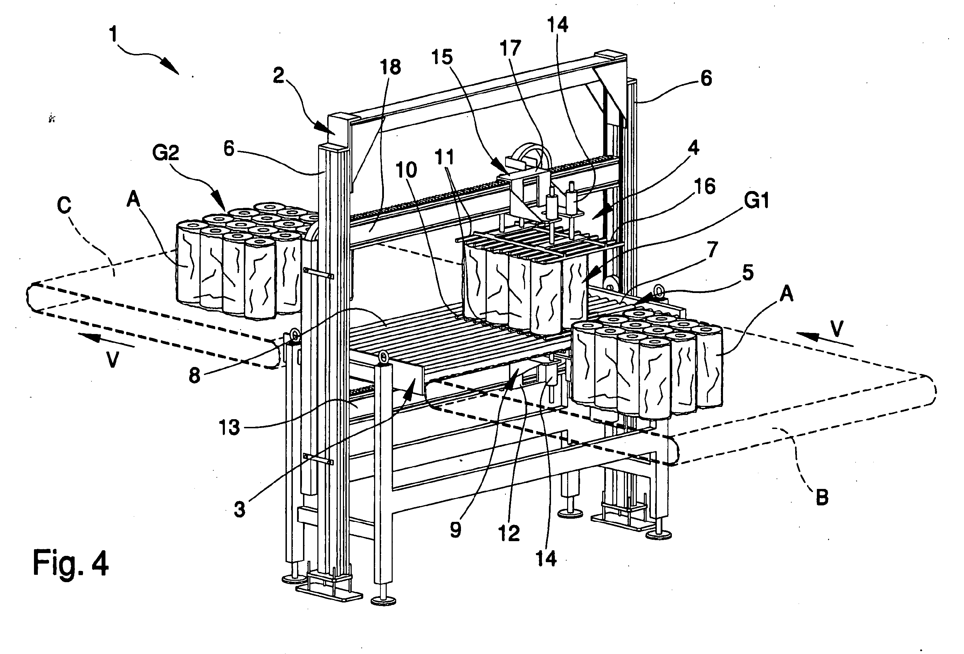

With special, but not limited, reference to the palletizing of packs A of articles of the paper roll type, as illustrated by way of example in figures 2, 3 and 4, a determinate number of packs A, aligned the one with the other, move along the feed line B, until they take up a position on the motorised roller conveyor 5.

The first comb 10, initially arranged underneath the motorised roller conveyor 5, in retracted position, moves along the first crosspiece 13 and positions itself in line with a first group G 1 of packs A to be retained.

The second comb 16, also in retracted position, moves along the second carriage 17 and along the second crosspiece 18 simultaneously and aligned with respect to the first comb 10.

Subsequently, the first and the second comb 10 and 16 translate by means of the actuators 14, coming closer together, lifting and gripping the first group G1 of packs A to be retained.

A second group G2 of packs A, not lifted and still positioned on the motorised roller conveyor 5, corresponds in terms of number to the packs A required for the subsequent palletizing phases. The motorised roller conveyor 5 moves the second group G2 towards the conveyor line C and towards the pickup station of the next palletizing system.

At this point, if the first retained group G1 consists exactly of the number of packs required by the pickup station for the subsequent palletizing operations, then this is released and continues towards the conveyor line C.

If this is not the case, and the number of packs A is higher than that required by the palletizing system, the first group G 1 is split into further groups; in the event of the number of packs A being lower than that required, the first group G 1 is aligned on the motorised roller conveyor 5 with a new group of packs A conveyed from the feed line B.

The feed procedure for the packs A towards the palletizing system then continues in the same way as described above.

In practice it has been found that the described invention achieves the intended purposes and more specifically emphasis is placed on the fact that the introduction of the feed system described above ensures greater flexibility of the whole palletizing system, including for articles of different types and dimensions, conveyed as a single pack or as packages of combined packs.

Another advantage is the possibility of using a single feed line for both single packs of articles and packages of several packs, with consequent huge reduction of the overall dimensions and general costs of the whole palletizing system.

The invention thus conceived is susceptible of numerous modifications and variations.

For example, details can be replaced with others that are technically equivalent.

In practice, the materials used, as well as the shapes and dimensions, may be any according to requirements. These modifications and variations are falling within the scope of protection of the invention, which is defined by the appended claims.

## Claims

1. Feed station (1) for articles (A) in automatic palletizing systems or the like, comprising :
- a supporting frame (2);
- article feeding means (3), supported by said frame (2), for feeding the articles (A) with a substantially horizontal feeding direction (V) through said feed station (1); and
- temporary retention means (4), operatively associated with said feeding means (3), for temporarily retaining a determined number of said articles (A), fed by said feeding means (3), so as to provide the simultaneous feeding of a preset number of said articles (A), as required by one pickup station, from said feed station (1) towards said one pickup station, wherein said retention means (4) comprise at least one lifting part (9) movable along a substantially vertical direction (D1) for lifting at least one of said article with respect to said feeding means (3), wherein said lifting part (9) is movable along a second direction (D2) substantially horizontal and substantially transversal with respect to the feed direction (V) of said articles (A)
**characterized by** the fact that said retention means (4) comprise at least one tightening element (15) for exerting a tightening force on said at least one lifted article against said lifting part (9).

2. Station according to claim 1, **characterized by** the fact that said feeding means (3) comprise a motorized roller conveyor (5).

3. Station according to one or more of the preceding claims, **characterized by** the fact that said motorized roller conveyor (5) is associated with said frame (2) at a point corresponding to at least a pair of uprights (6).

4. Station according to claim 3, **characterized by** the fact that said uprights (6) are positioned on opposite sides with respect to said feed direction (V) of said articles (A).

5. Station according to claims 3 or 4, **characterized by** the fact that said motorised roller conveyor (5) comprises a plurality of rollers (7) arranged substantially parallel and distanced to one another.

6. Station according to one or more of the preceding claims, **characterized by** the fact that said lifting part (9) is movable along said second direction (D2) for the entire width of said motorised roller conveyor (5).

7. Station according to one or more of the preceding claims, **characterized by** the fact that said lifting part (9) comprises a first comb (10) featuring a plurality of rods (11) arranged substantially parallel and coplanar to one another.

8. Station according to claim 7, **characterized by** the fact that the surface defined by said plurality of rods (11) of said first comb (10) is substantially parallel to the surface defined by said motorised roller conveyor (5).

9. Station according to claims 7 or 8, as dependent on claim 2, **characterized by** the fact that said lifting part (9) is movable along said first direction (D1) from a retracted position, in which said first comb (10) is arranged underneath with respect to the surface defined by said motorised roller conveyor (5), to a raised position, in which said first comb (10) is at least in part arranged above with respect to said surface, or vice versa, between said retracted position and said raised position, said rods being able to move through the slots defined between contiguous rollers of said motorised roller conveyor (5).

10. Station according to claim 7, **characterized by** the fact that said first comb (10) is supported by a first carriage (12) sliding along said second direction (D2) on at least one first crosspiece (13) which is arranged below said motorised roller conveyor (5) and with its ends associated to said pair of uprights (6).

11. Station according to one or more of the preceding claims, **characterized by** the fact that said tightening element (15) is movable along said first direction (D1), close to and/or away from said lifting part (9).

12. Station according to one or more of the preceding claims, **characterized by** the fact that said tightening element (15) is movable along said second direction (D2) in a synchronous way and aligned with respect to said lifting part (9).

13. Station according to one or more of the preceding claims 3 to 12, **characterized by** the fact that said tightening element (15) is supported by a second carriage (17) sliding along said second direction (D2) on at least one second crosspiece (18) arranged above said motorised roller conveyor (5) and with its ends associated with said pair of uprights (6).

14. Station according to one or more of the preceding claims, **characterized by** the fact that said tightening element (15) comprises a second comb (16) featuring a plurality of rods (11) arranged substantially parallel and coplanar to one another.

15. Station according to claim 14, as dependent on claim 7, **characterized by** the fact that said second comb (16) defines a surface substantially parallel to the surface defined by said first comb (10).

16. Station according to claim 14, as dependent on claim 10, **characterized by** the fact that at least one of said first comb (10) and said second comb (16) is associated with said first carriage (12) or said second carriage (17) respectively by interposition of at least one height-variation actuator.

17. Station according to claim 16, **characterized by** the fact that said height-variation actuator is of the pneumatic type.

18. Station according to claim 13, as dependent on claim 10, **characterized by** the fact that at least one between said first carriage (12) and said second carriage (17) is operatively associated with motorised means able to slide along said first crosspiece (13) and said second crosspiece (18) respectively.

19. Station according to one or more of the preceding claims, **characterized by** the fact that at least one of said feeding means (3) and said retention means (4) is operatively associated with a management and control unit.

20. Station according to claim 19, **characterized by** the fact that said management and control unit is of the microprocessor system type, of the PLC type or the like.

## Patentansprüche

1. Zuführstation (1) für Artikel (A) zu einem automatischen Palettierungssystem oder Ähnlichem umfassend:
- einen Trägerrahmen (2);
- von dem Rahmen (2) getragene Artikelzuführmittel (3) zum Zuführen der Artikel (A) mit einer im Wesentlichen horizontalen Zuführrichtung (V) durch die Zuführstation (1);
- und zeitweilige Rückhaltemittel (4), die operativ mit den Zuführmitteln (3) verbunden sind, um eine bestimmte Anzahl von Artikeln (A) vorübergehend zurückzuhalten, die von den Zuführmitteln (3) zugeführt werden, so dass die gleichzeitige Zuführung einer von einer Aufnahmestation geforderten, vorgegebenen Anzahl von Artikeln (A) von der Zuführstation (1) zu einer Aufnahmestation bereitgestellt wird, wobei die Rückhaltemittel (4) mindestens ein Hebeteil (9) umfassen, welches in einer im Wesentlichen vertikalen Richtung (D1) beweglich ist, um mindestens einen der Artikel bezogen auf die Zuführmittel (3) anzuheben, wobei das Hebeteil (9) in eine zweite, im Wesentlichen horizontale und im Wesentlichen transversale Richtung bezogen auf die Zuführrichtung (V) der Artikel (A) beweglich ist,
**dadurch gekennzeichnet, dass** die Rückhaltemittel (4) mindestens ein Anzugselement (15) des Hebeteils (9) umfassen.

2. Station nach Anspruch 1, **dadurch gekennzeichnet, dass** die Zuführmittel (3) eine motorisierte Rollenbahn (5) umfassen.

3. Station nach einem oder mehreren der vorstehenden Ansprüche, **dadurch gekennzeichnet, dass** die Rollenbahn (5) mit dem Rahmen (2) an einem Punkt verbunden ist, der mindestens einem Paar Stützen (6) entspricht.

4. Station nach Anspruch 3, **dadurch gekennzeichnet, dass** die Stützen (6) auf gegenüberliegenden Seiten bezogen auf die Zuführrichtung (V) der Artikel (A) angeordnet ist.

5. Station nach Anspruch 3 oder 4, **dadurch gekennzeichnet, dass** die Rollenbahn (5) mehrere Rollen (7) umfasst, die im Wesentlichen parallel und voneinander beabstandet angeordnet sind.

6. Station nach einem oder mehreren der vorstehenden Ansprüche, **dadurch gekennzeichnet, dass** das Hebeteil (9) in einer zweiten Richtung (D2) über die gesamte Breite der motorisierten Rollenbahn (5) hinweg beweglich ist.

7. Station nach einem oder mehreren der vorstehenden Ansprüche, **dadurch gekennzeichnet, dass** das Hebeteil (9) einen ersten Kamm (10) umfasst, der mehrere Stäbe (11) aufweist, die im Wesentlichen parallel und koplanar zueinander angeordnet sind.

8. Station nach Anspruch 7, **dadurch gekennzeichnet, dass** die von mehreren Stäben (11) definierte Fläche des ersten Kamms (10) im Wesentlichen parallel zu der von der motorisierten Rollenbahn (5) definierten Fläche ist.

9. Station nach Anspruch 7 oder 8, wie von Anspruch 2 abhängig, **dadurch gekennzeichnet, dass** das Hebeteil (9) in einer ersten Richtung (D1) aus einer zurückgezogenen Stellung, in der der erste Kamm (10) unterhalb der Fläche angeordnet ist, dir durch die motorisierte Rollenbahn (5) definiert wird, in eine angehobene Stellung beweglich ist, in der der erste Kamm (10) mindestens teilweise über der Fläche oder umgekehrt zwischen der zurückgezogenen Stellung und der angehobenen Stellung angeordnet ist, wobei die Stäbe durch die Schlitze, die zwischen den nebeneinander liegenden Rollen der motorisierten Rollenbahn (5) definiert sind, bewegt werden können.

10. Station nach Anspruch 7, **dadurch gekennzeichnet, dass** der erste Kamm (10) von einem ersten Schlitten (12) getragen wird, der in einer zweiten Richtung (D2) auf mindestens einem Kreuzstück (13) gleitet, welches unter der motorisierten Rollenbahn (5) angeordnet ist und an seinen Enden mit dem Paar Stützen (6) verbunden ist.

11. Station nach einem oder mehreren der vorstehenden Ansprüche, **dadurch gekennzeichnet, dass** das Anzugselement (15) in einer ersten Richtung (D1) zu dem Hebeteil (9) hin und/oder von diesem weg bewegt werden kann.

12. Station nach einem oder mehreren der vorstehenden Ansprüche, **dadurch gekennzeichnet, dass** das Anzugselement (15) in einer zweiten Richtung (D2) auf synchrone Weise und bezogen auf das Hebeteil (9) gefluchtet beweglich ist.

13. Station nach einem oder mehreren der vorstehenden Ansprüche von 3 bis 12, **dadurch gekennzeichnet, dass** das Anzugselement (15) von einem zweiten Schlitten (17) getragen wird, der in der zweiten Richtung (D2) auf mindestens einem zweiten Kreuzstück (18) gleitet, welches über der motorisierten Rollenbahn (5) angeordnet ist und an seinen Enden mit dem Paar Stützen (6) verbunden ist.

14. Station nach einem oder mehreren der vorstehenden Ansprüche, **dadurch gekennzeichnet, dass** das Anzugselement (15) einen zweiten Kamm (16) mit mehreren Stäben (11) umfasst, die im Wesentlichen parallel und koplanar zueinander angeordnet sind.

15. Station nach Anspruch 14, wie von Anspruch 7 abhängig, **dadurch gekennzeichnet, dass** der Kamm (16) eine im Wesentlichen parallel zu der vom ersten Kamm (10) definierten Fläche definiert.

16. Station nach Anspruch 14, wie von Anspruch 10 abhängig, **dadurch gekennzeichnet, dass** mindestens einer des ersten Kamms (10) und des zweiten Kamms (16) jeweils mit dem ersten Schlitten (12) oder dem zweiten Schlitten (17) durch Zwischenlegen von mindestens einem Höhenänderungsstellglied verbunden ist.

17. Station nach Anspruch 16, **dadurch gekennzeichnet, dass** das Höhenänderungsstellglied pneumatischen Typs ist.

18. Station nach Anspruch 13, wie von Anspruch 10 abhängig, **dadurch gekennzeichnet, dass** mindestens einer des ersten Schlittens (12) und des zweiten Schlittens (17) operativ mit den motorisierten Mitteln verbunden ist, die in der Lage sind, jeweils entlang des ersten Kreuzstückes (13) und des zweiten Kreuzstückes (18) zu gleiten.

19. Station nach einem oder mehreren der vorstehenden Ansprüche, **dadurch gekennzeichnet, dass** mindestens eines der Zuführmittel (3) und der Rückhaltemittel (4) operativ mit einer Verwaltungs- und Steuereinheit verbunden ist.

20. Station nach Anspruch 19, **dadurch gekennzeichnet, dass** es sich bei der Verwaltungs- und Steuereinheit um eine Einheit in der Art eines Mikroprozessorsystems, PLC o.ä. handelt.

## Revendications

1. Station d'alimentation (1) pour articles (A) dans des systèmes automatiques de palettisation ou analogues, comprenant :
- un cadre de support (2) ;
- des moyens d'alimentation d'articles (3), supportés par ledit cadre (2), pour alimenter les articles (A) avec une direction d'alimentation substantiellement horizontale (V) à travers ladite station d'alimentation (1) ; et
- des moyens de rétention temporaire (4), associés opérationnellement auxdits moyens d'alimentation (3), pour retenir temporairement un nombre déterminé de dits articles (A), alimentés par lesdits moyens d'alimentation (3), de manière à fournir l'alimentation simultanée d'un nombre préétabli de dits articles (A), comme requis par une station de ramassage, à partir de ladite station d'alimentation (1) vers ladite une station de ramassage, où lesdits moyens de rétention (4) comprennent au moins une partie de levage (9) mobile le long d'une direction substantiellement verticale (D1) pour soulever au moins un desdits articles par rapport auxdits moyens d'alimentation (3), où ladite partie de levage (9) est mobile le long d'une seconde direction (D2) substantiellement horizontale et substantiellement transversale par rapport à la direction d'alimentation (V) desdits articles (A)
**caractérisée par le fait que** lesdits moyens de rétention (4) comprennent au moins un élément de serrage (15) de ladite partie de levage (9).

2. Station selon la revendication 1, **caractérisée par le fait que** lesdits moyens d'alimentation (3) comprennent un transporteur à rouleaux motorisés (5).

3. Station selon une ou plusieurs des revendications précédentes, **caractérisée par le fait que** ledit transporteur à rouleaux motorisés (5) est associé audit cadre (2) en un point correspondant à au moins une paire de montants (6).

4. Station selon la revendication 3, **caractérisée par le fait que** lesdits montants (6) sont positionnés sur des côtés opposés par rapport à ladite direction d'alimentation (V) desdits articles (A).

5. Station selon les revendications 3 ou 4, **caractérisée par le fait que** ledit transporteur à rouleaux motorisés (5) comprend une pluralité de rouleaux (7) disposés 30 substantiellement en parallèle et à distance les uns des autres.

6. Station selon une ou plusieurs des revendications précédentes, **caractérisée par le fait que** ladite partie de levage (9) est mobile le long de ladite seconde direction (D2) pour toute la largeur dudit transporteur à rouleaux motorisés (5).

7. Station selon une ou plusieurs des revendications précédentes, **caractérisée par le fait que** ladite partie de levage (9) comprend un premier peigne (10) présentant une pluralité de tiges (11) disposées substantiellement en parallèle et coplanaires les unes aux autres.

8. Station selon la revendication 7, **caractérisée par le fait que** la surface définie par ladite pluralité de tiges (11) dudit premier peigne (10) est substantiellement parallèle à la surface définie par ledit transporteur à rouleaux motorisés (5).

9. Station selon les revendications 7 ou 8, dans la mesure où elles dépendent de la revendication 2, **caractérisée par le fait que** ladite partie de levage (9) est mobile le long de ladite première direction (D1) à partir d'une position rétractée, dans laquelle ledit premier peigne (10) est disposé en dessous par rapport à la surface définie par ledit transporteur à rouleaux motorisés (5), vers une position relevée, dans laquelle ledit premier peigne (10) est au moins en partie disposé au-dessus par rapport à ladite surface, ou vice versa, entre ladite position rétractée et ladite position relevée, lesdites tiges étant en mesure de se déplacer à travers les fentes définies entre des rouleaux contigus dudit transporteur à rouleaux motorisés (5).

10. Station selon la revendication 7, **caractérisée par le fait que** ledit premier peigne (10) est supporté par un premier chariot (12) coulissant le long de ladite seconde direction (D2) sur au moins une première pièce transversale (13) qui est disposée sous ledit transporteur à rouleaux motorisés (5) et avec ses extrémités associées à ladite paire de montants (6).

11. Station selon une ou plusieurs des revendications précédentes, **caractérisée par le fait que** ledit élément de serrage (15) est mobile le long de ladite première direction (D1), à proximité et/ou loin de ladite partie de levage (9).

12. Station selon une ou plusieurs des revendications précédentes, **caractérisée par le fait que** ledit élément de serrage (15) est mobile le long de ladite seconde direction (D2) de manière synchrone et aligné par rapport à ladite partie de levage (9).

13. Station selon une ou plusieurs des revendications précédentes 3 à 12, **caractérisée** 30 par le fait que ledit élément de serrage (15) est supporté par un second chariot (17) coulissant le long de ladite seconde direction (D2) sur au moins une seconde pièce transversale (18) disposée au-dessus du transporteur à rouleaux motorisés (5) et avec ses extrémités associées à ladite paire de montants (6).

14. Station selon une ou plusieurs des revendications précédentes **caractérisée par le fait que** ledit élément de serrage (15) comprend un second peigne (16) présentant une pluralité de tiges (11) disposées substantiellement en parallèle et coplanaires les unes aux autres.

15. Station selon la revendication 14, dans la mesure où elle dépend de la revendication 7, **caractérisée par le fait que** ledit second peigne (16) définit une surface substantiellement parallèle à la surface définie par ledit premier peigne (10).

16. Station selon la revendication 14, dans la mesure où elle dépend de la revendication 10, **caractérisée par le fait qu'**au moins un dudit premier peigne (10) et dudit second peigne (16) est associé audit premier chariot (12) ou audit second chariot (17) respectivement par interposition d'au moins un actionneur à variation de hauteur.

17. Station selon la revendication 16, **caractérisée par le fait que** ledit actionneur à variation de hauteur est de type pneumatique.

18. Station selon la revendication 13, dans la mesure où elle dépend de la revendication 10, **caractérisée par le fait qu'**au moins un entre ledit premier chariot (12) et ledit second chariot (17) est associé opérationnellement aux moyens motorisés en mesure de coulisser le long de ladite première pièce transversale (13) et ladite seconde pièce transversale (18) respectivement.

19. Station selon une ou plusieurs des revendications précédentes, **caractérisée par le fait qu'**au moins un desdits moyens d'alimentation (3) et desdits moyens de rétention (4) est associé opérationnellement à une unité de gestion et de commande.

20. Station selon la revendication 19, **caractérisée par le fait que** ladite unité de gestion et de commande est de type à système microprocesseur, de type API ou analogue.
